# EUROPÄISCHE PATENTANMELDUNG

(11) **EP 1 069 752 A2**
(43) Veröffentlichungstag der Anmeldung: **17.01.2001**
(21) Anmeldenummer: 00440178.2
(22) Anmeldetag: 16.06.2000
(51) Int. Cl.: H04M 9/08

(54) **Verfahren und Schaltungsanordnung zur Echokompensation in einem Telekommunikationssystem mit nichtlinearen Übertragungsstrecken**

(30) Priorität: 18.06.1999 DE 19928045
(71) Anmelder: ALCATEL, 75008 Paris (FR)
(72) Erfinder: Gerlach, Christian Georg Dr., 71254 Ditzingen (DE)
(74) Vertreter: Müller, Joachim, Dipl.-Ing.

(57) **Zusammenfassung**

In Festnetzen haben sich Echokompensatoren und Echodämpfungsglieder zur Unterdrückung von akustischen Echos und Leitungsechos bewährt, wenn nämlich Echosignal und beispielsweise das Eingangssignal eines digitalen Filters korrelieren. Um in Netzen, in denen eine Sprachcodierung verwendet wird, wie beispielsweise Mobilfunknetzen, eine vergleichbar gute Sprachqualität wie in Festnetzen zu erreichen, müssen entweder Echokompensationsmaßnahmen im Endgerät, beispielsweise im Funktelefon, vorgesehen sein oder im Mobilfunknetz, wenn nämlich wie in vielen praktischen Fällen die Echokompensation im Funktelefon (1) unzureichend ist.

Erfindungsgemäß wird aus vorhandenen Signalen (51, 52, bfi) in der Transcodereinheit (36) und mit bekannten Komponenten (33) des nichtlinearen Telekommunikationssystems der Einfluß der durch Codierer (11) und Decodierer (12) hervorgerufenen Nichtlinearitäten im Übertragungskanal nachgebildet, so daß danach bekannte Echounterdrückungsmaßnahmen getroffen werden können.

## Beschreibung

In modernen Telekommunikationssystemen ist die Sprachqualität ein wesentliches Gütemerkmal. Für einen Teilnehmer sind beispielsweise die Sprachverständlichkeit, der Klang, die Natürlichkeit, die Vollständigkeit der Sprachübertragung und die Gegensprechmöglichkeit Merkmale für eine subjektiv empfundene Sprachqualität. Objektiv wird die Übertragungsqualität wesentlich von der Beherrschung störender Echos bestimmt, die durch unerwünschte Kopplung zwischen einem Empfangspfad und einem Sendepfad auftreten und die bei Laufzeiten, die größer als 50 ms sind, als sehr störend empfunden werden. Echos treten beispielsweise durch elektrische Kopplung zwischen dem Sendepfad und dem Empfangspfad als Leitungsechos an 2 Draht-/4 Draht-Übergängen von Gabelschaltungen und/oder durch die akustische Kopplung zwischen Lautsprecher und Mikrofon in einem Funktelefon, besonders wenn beispielsweise eine suboptimale Freisprecheinrichtung vorhanden ist, auf.

Es ist bekannt, die Wirkung der Echos durch Echokompensatoren weitgehend zu beseitigen, vgl. R. Wehrmann u.a.: Signalverarbeitungsverfahren zur Verbesserung der Sprachkommunikation über Freisprecheinrichtungen. Der Fernmelde-Ingenieur, Verlag für Wissenschaft und Leben Georg Heidecker GmbH, Erlangen, 48. Jahrgang, Oktober 1994, 10/94 Seite 27-28. Mit einem Echokompensator wird die Übertragungsfunktion eines realen Telekommunikationssystems möglichst genau nachgebildet. Das beim Teilnehmer eintreffende Signal durchläuft dann sowohl das reale als auch das durch den Echokompensator nachgebildete System und anschließend wird das Ausgangssignal des Echokompensators vom echobehafteten Signal des realen Systems subtrahiert, so daß somit das Echo weitgehend kompensiert wird.

Derartige Echokompensatoren werden mit Finite Impulse Response-Filtern, kurz FIR-Filtern, realisiert, deren Wirkung von der präzisen Bestimmung der Filterkoeffizienten abhängig ist, vgl. DE-A-4430189. So muß sehr zuverlässig unterschieden werden zwischen Echos und lokalen Geräuschen, zwischen Echos von weit entfernten Reflektoren und Echos von nahe befindlichen Reflektoren sowie zwischen Empfangssignalformen, die hinreichend präzise Messungen erlauben, wie beispielsweise hinreichend starke breitbandige Signale und für die Messungen ungeeignete Empfangssignalformen, wie beispielsweise sinusförmige Dauertöne.

Weiterhin sind Schaltungen bekannt, die die Echos so stark bedämpfen, daß sie für einen Teilnehmer nicht mehr wahrnehmbar sind. Dazu wird ein Kompander eingesetzt, mit dem Sendesignale oberhalb eines Sollwertes auf einen einheitlichen Pegel komprimiert soweit sie den Sollwert aufweisen, verstärkt und soweit sie unterhalb des Sollwertes liegen, bedämpft werden. Dabei wird die Übertragungskennlinie des Kompanders außer von einem Kopplungsfaktor zwischen Sendepfad und Empfangspfad und einem vom Geräuschpegel bestimmten Steuersignal vom Empfangssprachsignal des fernen Sprechers gesteuert, vgl. DE-A-196 11548.

Um die Echounterdrückung durch die Verwendung eines Filters zu verbessern, ist es bekannt, zusätzlich zu einem Hauptfilter ein sogenanntes Hintergrundfilter einzusetzen, um die Bestimmung der Filterkoeffiezienten verbessern zu können. Dazu werden die von jedem Filter bewirkten Signaldifferenzen zwischen echobehaftetem Signal und Filterausgangssignal miteinander verglichen und aus dem Vergleichsergebnis wird ein Steuersignal zur verbesserten Einstellung der Filterkoeffizienten abgeleitet, vgl. EP-A-0 872 962.

Die beschriebenen Lösungen haben sich zwar bei linearen Übertragungsfunktionen bewährt, wenn nämlich Echosignal und Eingangssignal des digitalen Filters korrelieren. Sie sind jedoch für Telekommunikationssysteme mit nichtlinearen Übertragungsstrecken ungeeignet, die immer dann entstehen, wenn sich im Übertragungspfad Verschlüsselungseinrichtung und/oder hoch komprimierende Sprach-Codierer/Decodierer befinden, wie es in Mobilfunksystemen nach dem GSM (Global System for Mobile Communication) -Standard oder dem AMPS (Advanced Mobile Phone System) -Standard der Fall ist. Um in Mobilfunknetzen eine vergleichbar gute Sprachqualität wie in Festnetzen zu erreichen, müssen auch dort Maßnahmen zur Echokompensation oder Echounterdrückung durchgeführt werden. Dazu können zwar bekannte Lösungen direkt in den Endgeräten der mobilen Teilnehmer eingesetzt werden, es gibt jedoch eine beträchtliche Anzahl von im Einsatz befindlichen Endgeräten, in denen keine oder wenig wirksame Echokompensationsmaßnahmen oder Echodämpfungsmaßnahmen vorgesehen sind und eine Nachrüstung derartiger Maßnahmen einen unvertretbar hohen Aufwand bedeuten würde, so daß nur Maßnahmen im Netz selbst getroffen werden können.

Daraus resultiert die Aufgabe, ein Verfahren und eine Schaltungsanordnung zur Echokompensation in einem nichtlinearen Telekommunikationssystem, insbesondere in einem Mobilfunksystem nach dem GSM-Standard, anzugeben.

Diese Aufgabe wird in einem im ersten Patentanspruch beschriebenen Verfahren und mit einer im vierten Patentanspruch beschriebenen Schaltungsanordnung gelöst.

Das Wesen der Erfindung besteht darin, daß aus dem Festnetz bekannte Echokompensationsschaltungen mit nichtlinearen Schaltungen aus einem Telekommunikationsnetz mit Sprachcodiereinrichtungen zur Nachbildung des Echopfades kombiniert und dort vorhandene Signale zur Steuerung verwendet werden.

Die Erfindung wird nunmehr an einem Ausführungsbeispiel erläutert. In der dazugehörigen Zeichnung zeigen
- Fig. 1: ein Blockschaltbild einer ersten Variante der erfindungsgemäßen Schaltungsanordnung und
- Fig. 2: ein Blockschaltbild einer zweiten Variante der erfindungsgemäßen Schaltungsanordnung.

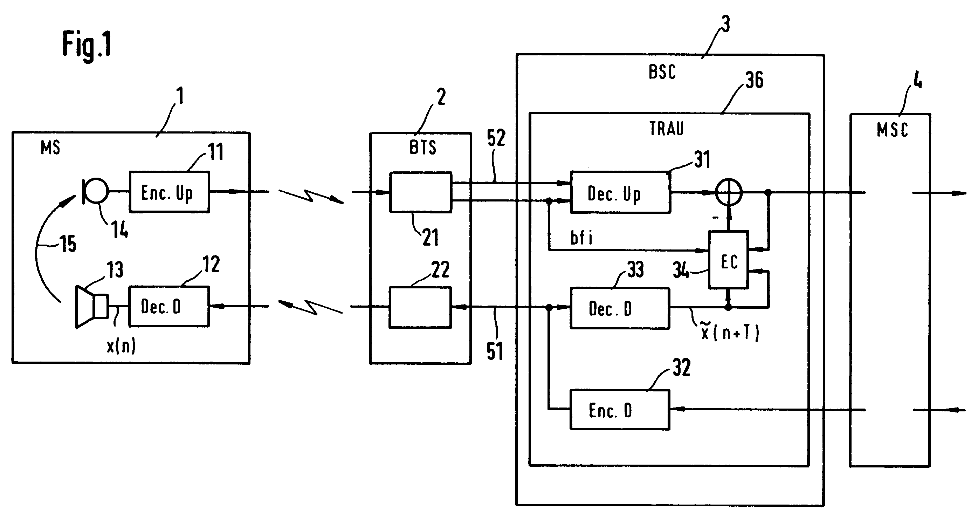

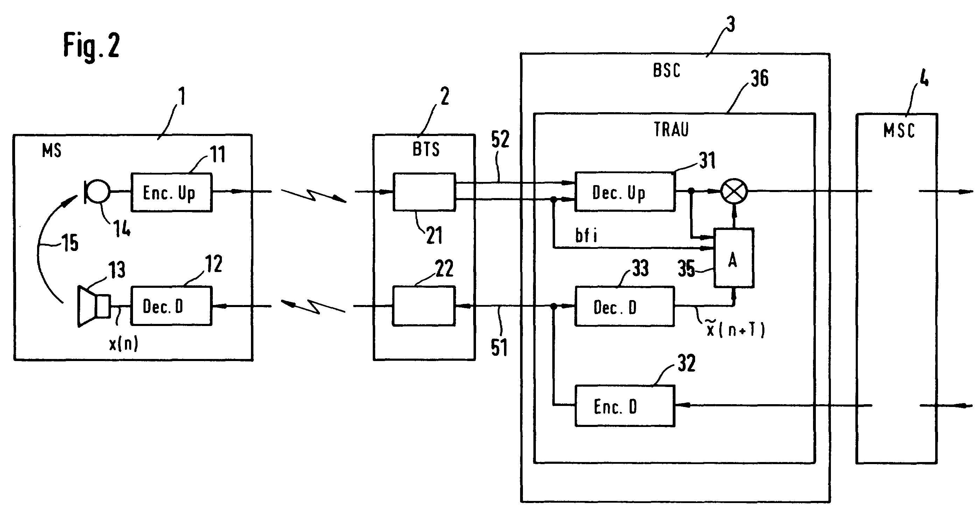

In Fig. 1 sind die wesentlichen Baugruppen eines Mobilfunksystems nach dem GSM-Standard dargestellt. Dazu gehören ein Funktelefon 1, engl. Mobile Station MS, eine Basisstation 2, engl. Base Transceiver Station BTS, eine Transcodereinheit (36), engl. Transcoder Rate Adaption Unit TRAU, die hier beispielhaft in einer Funktionseinheit 3 zur Steuerung der Basistationen, engl. Base Station Controller BSC, angeordnet ist und eine Mobilvermittlungsstelle 4, engl. Mobile Switching Centre MSC. Im folgenden werden die Baugruppen mit ihren englischsprachigen Abkürzungen bezeichnet. Die MS 1 enthält einen Lautsprecher 13, ein Mikrofon 14 und einen Codierer 11 für die Sprache in Senderichtung, engl. uplink, sowie einen Decodierer 12 für die Sprache in Empfangsrichtung, engl. downlink. Zu der BTS 2 gehört ein uplink-Kanaldecodierer 21 und ein downlink-Kanalcodierer 22. In der TRAU 36 befinden sich ein uplink-Decodierer 31, ein downlink-Codierer 32 und nunmehr zusätzlich ein Echokompensator 34 und ein downlink-Decodierer 33. Abweichend von der in Fig.1, 2 dargestellten Anordnung der TRAU 36 in der BSC 3 kann die TRAU 36 auch zwischen BSC 3 und MSC 4 oder in der MSC 4 angeordnet sein. Mit dem downlink-Decodierer 33 wird aus dem in der TRAU 36 vorhandenen downlink-Datenstrom 51 das Lautsprechersignal *x*(*n*) der MS 1 als Ausgangssignal *x̃* (*n* + *T*) des downlink-Decodierers 33 erzeugt, wobei das Lautsprechersignal *x*(*n*) bezüglich des Ausgangssignals *x̃*(*n*+*T*) des downlink-Decodierers 33 um die Zeit T verzögert ist. Mit diesem Ausgangssignal *x̃*(*n*+*T*) kann nunmehr der korrelierbare Teil des von der akustischen Kopplung 15 zwischen Lautsprecher 13 und Mikrofon 14 herrührenden Echos mit dem Echokompensator 34 kompensiert werden, wobei der Echokompensator 34 durch ein FIR-Filter realisiert werden kann. Vorteilhafterweise kann das ohnehin in der TRAU 36 vorhandene bfi (bad frame indicator)-Signal zur Verbesserung der Adaption des FIR-Filters verwendet werden. So wird die Berechnung der Filterkoeffizienten beispielsweise unterbrochen, wenn von dem bfi-Signal ein uplink-Kanal schlechter Qualität angezeigt wird. Ausgehend von dem uplink-Datenstrom 52 ist es möglich, mit einem hier nicht dargestellten uplink-Codierer, im Aufbau im wesentlichen gleich dem uplink-Codierer 11 in der MS 1, den Einfluß der Nichtlinearitäten in dem uplink-Kanal nachzubilden und die Echokompensation zu verfeinern. Allerdings ist zu berücksichtigen, daß die Komplexität eines Codierers etwa zehnmal größer ist als die Komplexität eines Decodierers. So ist es für eine kostengünstige Lösung sinnvoll, den Einfluß der Nichtlinearitäten im downlink-Kanal zu modellieren und die Einstellung des Echokompensators 34 von dem bfi-Signal des uplink-Kanals abhängig zu machen.

Die beschriebenen Vorteile werden in gleicher Weise bei Verwendung eines Kompanders, der in der eingangs zitierten Schrift DE-A- 196 115 48 beschrieben ist, oder bei Verwendung der Kombination aus einem Kompander mit einem FIR-Filter wirksam. In Fig. 2 ist die Schaltungsanordnung bei Verwendung eines solchen Echodämpfungsgliedes 35 dargestellt. Auch in diesem Fall ist es möglich, die Nichtlinearitäten des uplink-Kanals mit bekannten Schaltungen und vorhandenen Signalen zu modellieren.

Die Echokompensation kann weiter verbessert werden, wenn weitere Qualitätsinformationen, beispielsweise zur Übertragungsqualität im downlink-Kanal zur Verfügung stehen. Derartige Informationen sind in der TRAU 36 vorhanden, wenn zukünftig GSM-AMR (Adaptive Multi Rate) - Codierer und -Decodierer eingesetzt werden.

Grundsätzlich ist es auch möglich, einen Echokompensator im MSC 4 anzuordnen. Um hier die Nichtlinearitäten nachzubilden, um ein für den Echokompensator korrelierfähiges Signal zu erhalten, ist eine Kettenschaltung aus einem downlink-Codierer und aus einem downlink-Decodierer erforderlich, somit eine Lösung, die beträchtlich aufwendiger als die erfindungsgemäße Lösung ist.

Insgesamt wird mit der Erfindung eine kostengünstige Lösung für eine Echokompensation auf Netzebene in Mobilfunknetzen angegeben.

## Patentansprüche

1. Verfahren zur Unterdrückung eines Echos, hervorgerufen durch akustische oder elektrische Kopplungen zwischen den Übertragungswegen in einem Telekommunikationssystem mit nichtlinearen Übertragunsabschnitten aus einem Sprachcodierer und einem Sprachdecodierer, insbesondere in einem Mobilfunksystem, das eine Mobile Station (1), eine Basisstation (2), eine Transcodereinheit (36) und eine Funktionseinheit zur Steuerung der Basisstation (3) sowie eine Mobilvermittlungsstelle (4) enthält,
**dadurch gekennzeichnet, daß**
eine Einrichtung zur Unterdrückung des Echos (34, 35) in der Transcodereinheit (36) angeordnet wird und eine Nachbildung des nichtlinearen Anteils des Echopfades mit in dem Telekommunikationssystem vorhandenen Funktionseinheiten vorgenommen wird.

2. Verfahren nach Anspruch 1, dadurch gekennzeichnet, daß der nichtlineare Anteil des Echopfades in der Transcodereinheit (36) unter Verwendung eines Sprachdecodierers (33) nachgebildet wird.

3. Verfahren nach Anspruch 1, dadurch gekennzeichnet, daß die Einrichtung zur Unterdrückung des Echos in Abhängigkeit von einem Bad-Frame-Signal bfi gesteuert wird.

4. Schaltungsanordnung zur Durchführung des Verfahrens nach Anspruch 1, dadurch gekennzeichnet, daß in der Transcodereinheit (36) der Eingang eines downlink-Sprachdecodierers (33) mit einer den downlink-Datenstrom (51) führenden Leitung verbunden ist und daß der Ausgang des downlink-Sprachdecodierers (33) mit der Einrichtung zur Unterdrückung des Echos (34, 35) verbunden ist.

5. Schaltungsanordnung nach Anspruch 4, dadurch gekennzeichnet, daß als Einrichtung zur Unterdrückung des Echos (34) ein FIR-Filter verwendet wird.

6. Schaltungsanordnung nach Anspruch 4, dadurch gekennzeichnet, daß als Einrichtung zur Unterdrückung des Echos (35) ein Kompressor/Expander verwendet wird.
